# EUROPEAN PATENT SPECIFICATION

(11) **EP 3 919 375 B1**
(45) Date of publication and mention of the grant of the patent: **23.08.2023**
(21) Application number: 21161067.0
(22) Date of filing: 05.03.2021
(51) Int. Cl.: B64C 13/24, B64C 19/00, B64C 27/00, B64C 27/08, B64C 27/57, B64C 27/82, B64D 35/04, B64D 35/08, B64D 31/10, G05D 1/00, H02P 5/74, H02P 29/60, B60K 11/02, B64D 33/08, B64D 31/06, B64C 27/72, H02P 5/00

(54) **DISTRIBUTED PROPULSION WITH THERMAL MANAGEMENT**
VERTEILTER ANTRIEB MIT THERMISCHER VERWALTUNG
PROPULSION DISTRIBUÉE AVEC GESTION THERMIQUE

(30) Priority: 03.06.2020 US 202016891971
(43) Date of publication of application: 08.12.2021
(73) Proprietor: Textron Innovations Inc., Providence, Rhode Island 02903 (US)
(72) Inventor: BUSTAMANTE, Marc, Montreal, Québec H4A 3C1 (CA); CHEN, Kuang, Montreal, Québec H4R 0HR (CA); SENTHILNATHAN, Thuvaragan, Laval, Québec H7N 6H4 (CA); OUELLET, Marc, Sainte-Sophie, Québec J5J 2G9 (CA); BIRON, Guillaume, Blainville, Québec J7C 0C3 (CA)
(74) Representative: Barker Brettell LLP

(56) References cited:
- EP-A1- 3 243 750
- EP-B1- 3 339 600
- WO-A1-2020/242899
- US-A1- 2017 158 342
- US-A1- 2018 346 135
- US-A1- 2019 283 865

## Description

### TECHNICAL FIELD

This disclosure relates in general to the field of aircraft, and more particularly, to flight control.

### BACKGROUND

This section provides background information to facilitate a better understanding of the various aspects of the disclosure. It should be understood that the statements in this section of this document are to be read in this light, and not as admissions of prior art.

Without limiting the scope of this disclosure, the background is described in connection with anti-torque systems. Counter-torque tail rotors are often used in helicopters and are generally mounted adjacent to vertical fins that provide for aircraft stability. In such a configuration, the helicopter rotor produces a transverse airflow. Tail rotors can be driven at high angular velocities to provide adequate aerodynamic responses. Sometimes, vortices produced by a main helicopter rotor and the tail rotor can interact to reduce the efficiency of the thrust created by the rotors. The interference of the vortices may also cause an increase in noise.

US 2017/158342 A1 discloses an aerial vehicle having a malfunction determiner that determines whether there is a malfunction in one of the thrusters of the aerial vehicle. A flight controller activates the thrusters, and controls the output of each of the thrusters. The flight controller deactivates, when it is determined that there is a malfunction in one of the thrusters as a malfunctioned thruster, the malfunctioned thruster. The flight controller deactivates a selected thruster in the thrusters; the selected thruster being paired to the malfunctioned thruster, and controls the active thrusters except for the deactivated thrusters in all the thrusters to make the flight attitude of the aerial vehicle stable. The flight controller controls the active thrusters to cause the aerial vehicle to land while maintaining the flight attitude of the aerial vehicle being stable.

US 2018/346135 A1 discloses a system and a method for slowing the rotation of a rotor using, for example, a rotor brake system for a rotorcraft comprising: one or more generators connected to a main rotor gearbox; an electric distributed anti-torque system mounted on a tail boom of the rotorcraft comprising two or more electric motors connected to the one or more generators, wherein the two or more electric motors are connected to one or more blades; and wherein a rotation of the rotor is slowed by placing a drive load on the main rotor gearbox with the one or more generators to bleed the mechanical power from rotor into electrical power via the two or more electric motors, wherein the electric distributed anti-torque system generates thrust in opposing directions.

EP3243750A1 discloses a distributed propulsion system for a craft that comprises a frame, a plurality of hydraulic or electric motors disposed within or attached to the frame in a distributed configuration; a propeller operably connected to each of the hydraulic or electric motors, a source of hydraulic or electric power disposed within or attached to the frame and coupled to each of the disposed within or attached to the frame, wherein the source of hydraulic or electric power provides sufficient energy density for the craft to attain and maintain operations of the craft, a controller coupled to each of the hydraulic or electric motors, and one or more processors communicably coupled to each controller that control an operation and speed of the plurality of hydraulic or electric motors.

US 2019/283865 A1 discloses a method for operating a multicopter experiencing a failure during flight, the multicopter comprising a body, and at least four effectors attached to the body, each operable to produce both a torque and a thrust force which can cause the multicopter to fly when not experiencing said failure. The method may comprise the step of identifying a failure wherein the failure affects the torque and/or thrust force produced by an effector, and in response to identifying a failure carrying out a number of steps.

WO 2020/242899 A1 discloses an integrated multimode thermal energy transfer system, method and apparatus for full-scale clean fuel electric-powered multirotor aircraft with automatic on-board-capability to provide sensor-based temperature awareness and adjustment to critical components and zones of the aircraft. Automatic computer monitoring, including by a programmed triple-redundant digital autopilot computer, controls each motor-controller and motor to produce pitch, bank, yaw and elevation, while simultaneously measuring, calculating, and adjusting temperature and heat transfer of aircraft components and zones, to protect critical components from exceeding operating parameters and to provide a safe, comfortable environment for occupants during flight. By using the results of the measurements to inform computer monitoring, the methods and systems can use byproducts including thermal energy disparities and differentials related to both fuel supply systems and power generating systems to both add and remove heat from different aircraft zones to improve aircraft function, comfort, and efficiency.

EP 3 339 600 B1 discloses an engine cooling system for a rotorcraft comprising: an engine having an engine cooling circuit; a hydraulic pump powered by the engine to pump hydraulic fluid; and a hydraulic circuit in fluid communication with the hydraulic pump and the engine cooling circuit; and a heat exchanger upstream of the engine cooling circuit, the heat exchanger operable to cool the hydraulic fluid entering the engine cooling circuit; characterized in that the hydraulic circuit provides hydraulic power to at least one hydraulic propulsion system each including a hydraulic motor and a propeller, the hydraulic motor operable to provide rotational energy to the propeller, wherein, the hydraulic pump is adapted to pump the hydraulic fluid through both the hydraulic circuit including the at least one hydraulic propulsion system and the engine cooling circuit, thereby cooling the engine.

### SUMMARY

In accordance with the invention there is provided a distributed propulsion system with thermal management and a method of operating the distributed propulsion system, as defined by the appended claims.

### BRIEF DESCRIPTION OF THE DRAWINGS

The disclosure is best understood from the following detailed description when read with the accompanying figures. It is emphasized that, in accordance with standard practice in the industry, various features are not drawn to scale. In fact, the dimensions of various features may be arbitrarily increased or reduced for clarity of discussion.
Figure 1 illustrates an exemplary aircraft incorporating an exemplary distributed propulsion system with thermal management according to one or more aspects of the disclosure.
Figure 2 illustrates an exemplary distributed anti-torque propulsion system with thermal management according to one or more aspects of the disclosure.
Figure 2A illustrates an exemplary liquid cooled distributed propulsion system with thermal management according to one or more aspects of the disclosure.
Figure 3 illustrates an exemplary distributed propulsion system with thermal management according to one or more aspects of the disclosure.
Figure 4 illustrates an exemplary method of operating a distributed propulsion system with thermal management according to one or more aspects of the disclosure.
Figure 5 illustrates an exemplary method of operating a distributed propulsion system with thermal management according to one or more aspects of the disclosure.

### DETAILED DESCRIPTION

It is to be understood that the following disclosure provides many different embodiments, or examples, for implementing different features of various illustrative embodiments. Specific examples of components and arrangements are described below to simplify the disclosure. These are, of course, merely examples and are not intended to be limiting. For example, a figure may illustrate an exemplary embodiment with multiple features or combinations of features that are not required in one or more other embodiments and thus a figure may disclose one or more embodiments that have fewer features or a different combination of features than the illustrated embodiment. Embodiments may include some but not all the features illustrated in a figure and some embodiments may combine features illustrated in one figure with features illustrated in another figure. Therefore, combinations of features disclosed in the following detailed description may not be necessary to practice the teachings in the broadest sense and are instead merely to describe particularly representative examples. In addition, the disclosure may repeat reference numerals and/or letters in the various examples. This repetition is for the purpose of simplicity and clarity and does not dictate a relationship between the various embodiments and/or configurations discussed.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms such as "inboard," "outboard," "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction. As used herein, the terms "connect," "connection," "connected," "in connection with," and "connecting" may be used to mean in direct connection with or in connection with via one or more elements. Similarly, the terms "couple," "coupling," and "coupled" may be used to mean directly coupled or coupled via one or more elements.

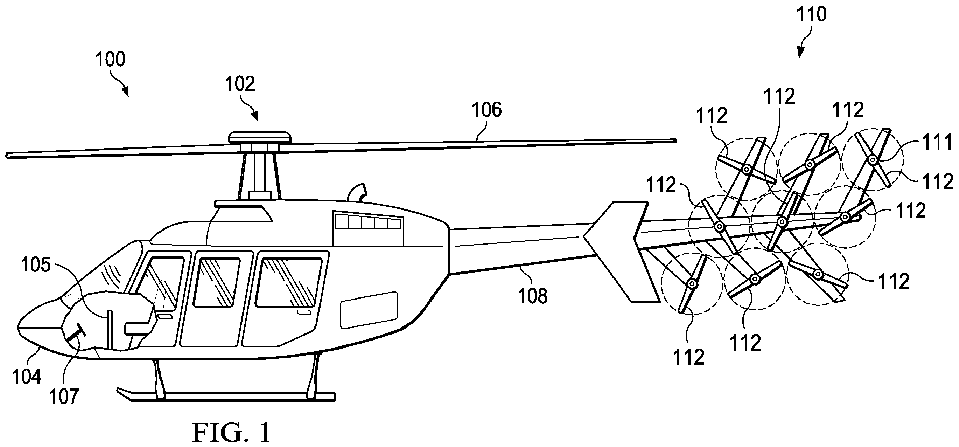

Figure 1 illustrates an exemplary rotary aircraft 100, shown as a helicopter, having a distributed propulsion matrix 110 with a plurality of rotors 112, i.e., fans, blades, each directly driven by an associated motor 111. In this example, distributed propulsion matrix 110 is implemented as an anti-torque matrix 110 and includes nine rotors 112 and nine associated motors 111. Each motor 111 is driven to produce a thrust.

Exemplary aircraft 100 includes a rotary system 102 carried by a fuselage 104. Rotor blades 106 connected to rotary system 102 provide flight. Rotor blades 106 are controlled by multiple controllers within the fuselage 104. For example, during flight, a pilot can manipulate controllers 105, 107 for changing a pitch angle of rotor blades 106 and to provide vertical, horizontal and yaw flight control. Exemplary aircraft 100 has a tail boom 108, which supports anti-torque matrix 110 at the aft end. Each of rotors 112 can be operated individually or in groups to provide a net thrust for example for transversely stabilizing exemplary aircraft 100. As further described herein, motors 111 can be operated individually or in groups at different speeds to produce the pilot demanded thrust and to control the motor temperatures to avoid or alleviate overheating.

Although the distributed propulsion system is described herein with reference to an anti-torque system, it is understood that the system and control can be implemented in other distributed propulsion systems and in manned and unmanned rotary aircraft. Teachings of certain embodiments recognize that rotors 112 may represent one example of a rotor or anti-torque rotor; other examples include, but are not limited to, tail propellers, ducted tail rotors, and ducted fans mounted inside and/or outside the aircraft. Teachings of certain embodiments relating to rotors and rotor systems may apply to rotor systems, such as distributed rotors, tiltrotor, tilt-wing, and helicopter rotor systems. It should be appreciated that teachings herein apply to manned and unmanned vehicles and aircraft including without limitation airplanes, rotorcraft, hovercraft, helicopters, and rotary-wing vehicles.

The fan assemblies may be fixed pitch rotors with a variable speed motor, variable pitch rotors with a variable speed motor, or variable pitch rotors with fixed speed motors. In some embodiments, the motor is an electric motor and at least one of: a self-commutated motor, an externally commutated motor, a brushed motor, a brushless motor, a linear motor, an AC/DC synchronized motor, an electronic commutated motor, a mechanical commutator motor (AC or DC), an asynchronous motor (AC or DC), a pancake motor, a three-phase motor, an induction motor, an electrically excited DC motor, a permanent magnet DC motor, a switched reluctance motor, an interior permanent magnet synchronous motor, a permanent magnet synchronous motor, a surface permanent magnet synchronous motor, a squirrel-cage induction motor, a switched reluctance motor, a synchronous reluctance motor, a variable-frequency drive motor, a wound-rotor induction motor, an ironless or coreless rotor motor, or a wound-rotor synchronous motor. In another aspect, the motor is a hydraulic motor is at least one of: a gear and vane motor, a gerotor motor, an axial plunger motor, a constant pressure motor, a variable pressure motor, a variable flow motor, or a radial piston motor.

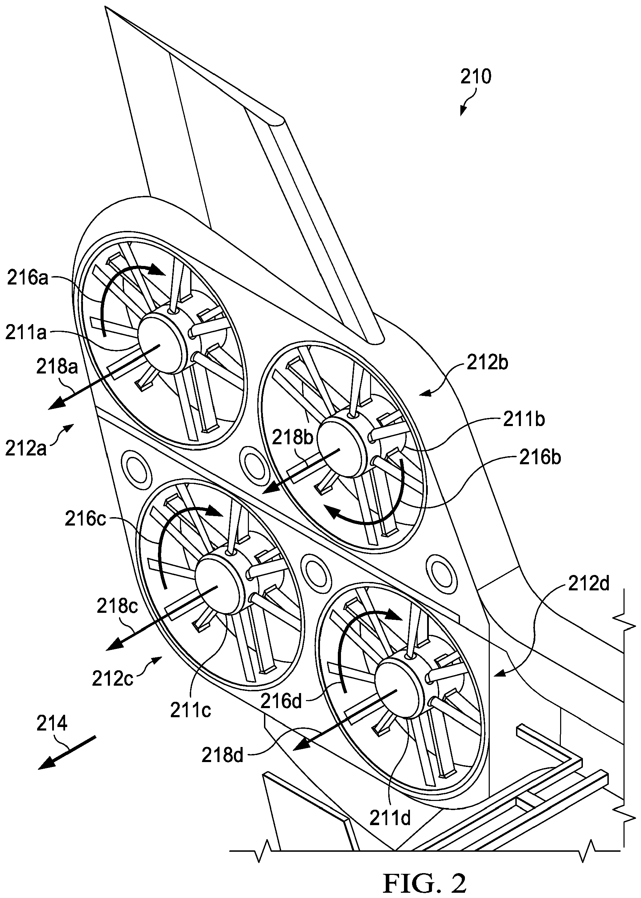

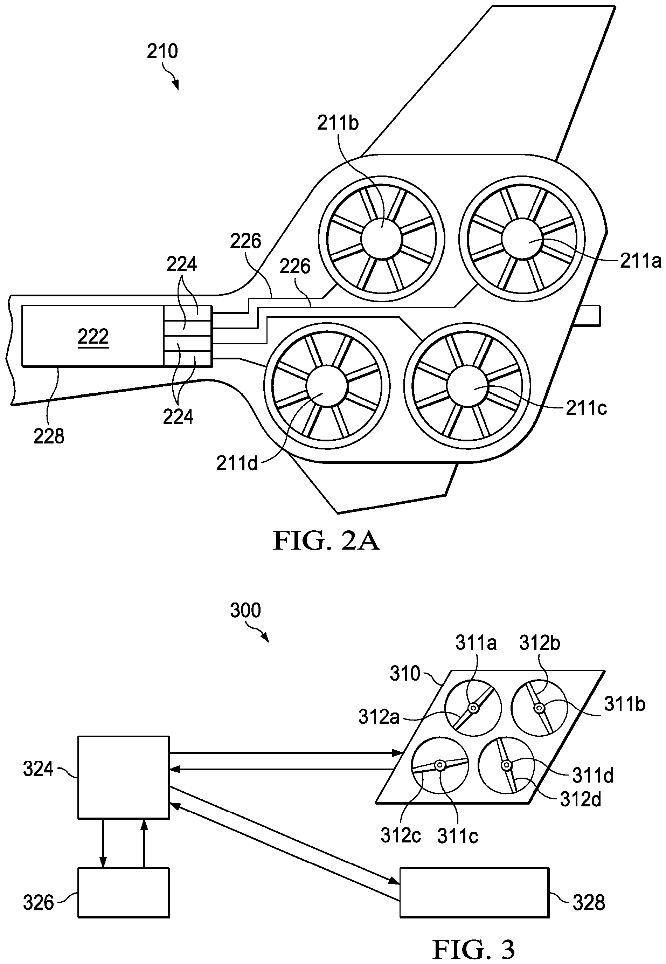

Figure 2 illustrates an exemplary anti-torque matrix 210 having four shrouded rotors generally denoted with the numeral 212 and individually designated 212a - 212d. In Figure 2, rotors 212a-212d are driven, directly by motors 211a-211d. Exemplary embodiments are generally described herein with reference to fixed pitch rotors individually driven by variable speed motors. However, in some embodiments the rotors may be variable pitch rotors that are individually driven by variable or fixed speed motors. In operation, a pilot can control the thrust, e.g., demanded thrust or net thrust, of anti-torque matrix 210, for example, through operation of pilot controls, e.g., pedals 107 (FIG. 1). Through operation of the controls, the rotational speed and/or rotor pitch and the direction of rotation of rotors 212a-212d can be manipulated to produce a demanded thrust 214. In an embodiment, a flight control computer, e.g. logic, can control the motor power output of one or more motors 211a-211d to alter the thrust to achieve a desired aircraft yaw rate in response to the pilot's control inputs, which can include positive, negative, or zero yaw rate. As further described, flight control computer can control the thrust of individual rotors and thus the power consumption or output of the associated individual motors to mitigate overheating of the motors.

Figure 2 illustrates anti-torque matrix 210 producing a thrust 214. In Figure 2, individual fixed pitch rotors 212a-212d are operated at individual rotational speeds 216a-216d to produce individual thrusts 218a-218d resulting in anti-torque matrix thrust 214. When producing a high thrust 214 the individual motors 211a-211d are operated at a rotational speed that is a high percentage of the maximum rated speed (RPM) of motor 211a-211d. In some embodiments, rotors 212a-212d are variable pitch rotors and thrust is controlled by changing the pitch of the rotors. As the motor power increases, e.g., increased speed or torque, the temperature of the motor and/or motor controller increases. Motor temperature is also influenced by factors, such as altitude, ambient temperature, humidity, and the location of a motor in the matrix of rotors. If motor temperature is too high, the motor may lose power, be damaged, or fail. According to exemplary embodiments, thermal management monitors temperature of the individual motors and can reduce the load on the motor to allow cooling. In accordance to an embodiment, the motor speed is reduced or stopped in response to the motor temperature exceeding motor temperature threshold. In another exemplary embodiment, the pitch of the rotor blade can be changed, e.g. the angle of attack of the blade reduced, resulting in a lower power demand on the motor for the same RPM. The motor temperature threshold may be selected and set based on various criteria. For example, in response to a first motor reaching the high motor temperature threshold, the thermal management control may reduce the motor power output (e.g., speed and/or torque) of the first motor for a period of time allowing the first motor to cool. The period of time may be set, for example, as a predetermined time or based on motor temperature feedback. In some embodiments, the thrust of one or more of the other motors may be increased, e.g. increase motor speed and/or blade pitch change, to maintain the pilot demanded thrust 214. When two or more motors exceed the temperature threshold, the power output of each of the motors may be adjusted to its best operating power output range, for example the best operational speed and at different target RPMs. In some embodiments, reducing motor power output pursuant to thermal management may result in a reduction of the thrust below a pilot demanded thrust. Accordingly, the thermal management can allow a pilot to override reducing thrust from the overheating motor to maintain the required thrust and provide the time for the pilot to maneuver out of the high thrust conditions.

Figure 2A illustrates an exemplary anti-torque matrix 210 with liquid cooled motors. Liquid cooling system 220 includes a liquid coolant 222 that is circulated to cool the individual motors of plurality of motors 211a-211d. Liquid cooling system 220 includes regulators 224 in communication with the conduits 226 between the coolant reservoir 228 and the individual motors, e.g. motors 211a-211d. Regulators 224 may be valves, thermostats, actuators or other devices that regulate or control the flow of coolant through the associated conduit. Regulators 224 are in communication with the thermal management logic and motor temperature sensors. Upon indication that a motor temperature meets or exceeds a threshold temperature the regulator is manipulated to cool the high temperature motor.

Figure 3 illustrates an exemplary control system 300 for use with a distributed propulsion matrix 310 having a plurality of rotors 312a-312d each driven by a motor 311a-31 1d. The rotors may be fixed pitch, whereby thrust is controlled by motor speed or variable pitch rotors driven by fixed or variable speed motors. A control logic 324 with thermal management is connected to a pilot input controls, e.g. pedals 107 (FIG. 1), and temperature sensors 326. Each motor 311a-311d comprises a temperature sensor 326 to monitor the individual motor temperatures. Temperature sensor 326 may read temperature for example in the motor windings or stator. Control logic 324 is connected to motors 311a-311d and controls the thrust of rotors 312a-312d. Control logic 324 is connected to a table 328 that includes, for example, motor speed versus thrust for each of motors 311a-311d and or motor torque and rotor pitch versus thrust. Table 324 may be integrated in control logic 324. Control logic 324 may look up the motor power output and thrust to achieve a desired distributed propulsion matrix thrust and maintain motor temperatures of each of motors 311a-311d below a threshold temperature. Control logic 324 may be integrated in a dedicated control unit or a control unit such as a flight control computer.

With reference to liquid cooling system 220 illustrated in Figure 2A, control logic 324 with thermal management is connected to regulators 224 and temperature sensors 326. In response to a high motor temperature, one or more of regulators 224 are manipulated to increase the cooling capacity circulated through the one or more high temperature motors.

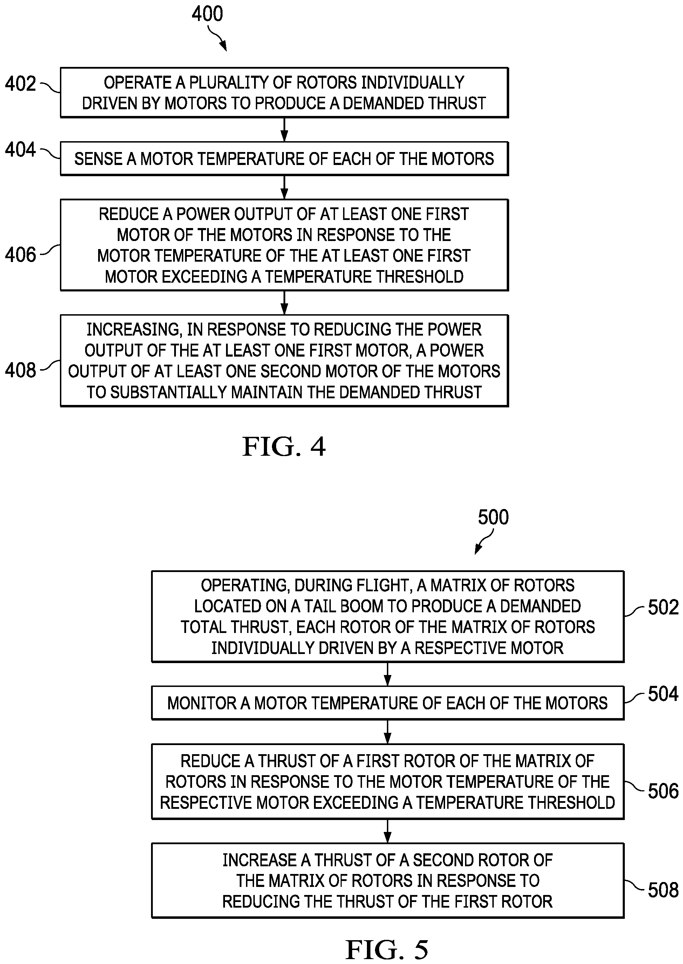

Figure 4 illustrates an exemplary method 400 of operating a distributed propulsion system. A block 402 a plurality of rotors 312a-312d individually driven by motors 311a-311d are operated to produce a pilot demanded thrust. Rotors 312a-312d may be fixed or variable pitch rotors and motors 311a-311d may be fixed or variable speed motors. At block 404 the temperature of motors 311a-311d are individually monitored by sensors 326. At block 406, the thrust of one or more rotors is reduced in response to the temperature of the respective one or more motors exceeding a high temperature threshold. Reducing the thrust of a rotor reduces the power output or consumption of the associated motor. For example, in an exemplary electric distributed propulsion system the motor speed of a variable speed motor driving a fixed-pitch rotor is reduced in response to the temperature of the variable speed motor exceeding a high temperature threshold. At block 408, in response to reducing power output of one or more motors and thus reducing thrust of the associated rotors, the output power of one or more of the other motors may be increased for example to maintain the demanded thrust. In an embodiment, the pitch angle of a rotor is increased and the power output of the associated motor is increased to maintain the pilot demanded net thrust. An operator, e.g., a human, may be allowed to override reducing the motor output of the high temperature motor for example to maintain a net thrust. With regard to an aircraft, the operator may be a pilot and or flight control computer of a manned or unmanned aircraft.

Figure 5 illustrates an exemplary method 500 of operating an aircraft 100. At block 502, operating, during flight, a matrix 310 of rotors 312a-312d individually driven by motors 311a-311d to produce a pilot demanded thrust 214. At block 504, motor temperature of each of the motors is monitored. At block 506, the thrust of at least one of the rotors is reduced in response to the associated motor reaching a motor temperature threshold. At block 508, the thrust of one or more second rotors of the matrix of rotors is increased to maintain the demanded thrust.

Conditional language used herein, such as, among others, "can," "might," "may," "e.g.," and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include such elements or features.

The term "substantially," "approximately," and "about" is defined as largely but not necessarily wholly what is specified (and includes what is specified; e.g., substantially 90 degrees includes 90 degrees and substantially parallel includes parallel), as understood by a person of ordinary skill in the art. The extent to which the description may vary will depend on how great a change can be instituted and still have a person of ordinary skill in the art recognized the modified feature as still having the required characteristics and capabilities of the unmodified feature. In general, but subject to the preceding, a numerical value herein that is modified by a word of approximation such as "substantially," "approximately," and "about" may vary from the stated value, for example, by 0.1, 0.5, 1, 2, 3, 4, 5, 10, or 15 percent.

The foregoing outlines features of several embodiments so that those skilled in the art may better understand the aspects of the disclosure. Those skilled in the art should appreciate that they may readily use the disclosure as a basis for designing or modifying other processes and structures for carrying out the same purposes and/or achieving the same advantages of the embodiments introduced herein. Those skilled in the art should also realize that such alternative constructions do not depart from the scope of the invention, which is determined only by the appended claims . The term "comprising" within the claims is intended to mean "including at least" such that the recited listing of elements in a claim are an open group. The terms "a," "an" and other singular terms are intended to include the plural forms thereof unless specifically excluded.

## Claims

1. A distributed propulsion system (110, 210) with thermal management for an aircraft, the system comprising:
two or more motors, (211a-d, 311a-d);
two or more rotors (212a-d, 312a-d) being each associated with one of the two or more motors (211a-d, 311a-d), each motor (211a-d, 311a-d) being individually controlled, and each motor (211a-d, 31 1a-d) comprising a temperature sensor (326); a pilot input control (107) connected to the associated motors (211a-d, 311a-d) to demand the associated motors (211a-d, 311a-d) to produce a demanded thrust,
a control system (300) comprising a control logic (324) with thermal management connected to the pilot input control (107), to the temperature sensors (326) and to the motors (211a-d, 311a-d), wherein the control logic (324) is configured to control independently a motor power output of each motor of the associated motors (211a-d, 311a-d) to produce the demanded thrust and to control a motor temperature of one or more of the associated motors (21 1a-d, 31 1a-d);
a liquid cooling system (220) including regulators (224), conduits (226) and a coolant reservoir (228), the regulators (224) in communication with conduits (226) between a coolant reservoir (228) and each of the motors (21 1a-d); and
the control system being further connected to the regulators (224) and wherein the control logic (324) is configured to manipulate one or more of the regulators (224) to increase a cooling capacity circulated through one or more of the motors (21 1a-d) in response to a temperature read by one or more of the temperature sensors (326) of the one or more of the motors (211a-d) being above a threshold temperature.

2. The system (110, 210) of claim 1, wherein the two or more rotors (112, 212a-d) are included in an aircraft (100).

3. The system (110, 210) of any one of claims 1 or 2, wherein the two or more rotors (112, 212a-d) are in an anti-torque matrix.

4. The system (110, 210) of any one of claims 1 to 3, wherein the motor power output comprises motor speed or motor torque.

5. A method of operating the distributed propulsion system (110, 210) of any one of the preceding claims, the method comprising:
operating the plurality of rotors (112, 212a-d) individually driven by the motors (111, 211a-d) to produce a demanded thrust;
sensing a motor temperature of each of the motors (111, 211a-d);
reducing a power output of at least one first motor of the motors (111, 211a-d) in response to the motor temperature of the at least one first motor exceeding a temperature threshold; and
increasing, in response to reducing the power output of the at least one first motor, a power output of at least one second motor of the motors (111, 211a-d) to maintain the demanded thrust.

6. The method of claim 5, wherein the plurality of rotors (112, 212a-d) are fixed pitch rotors and the motors (111, 211a-d) are variable speed motors;
the reducing the power output of the at least one first motor comprises reducing motor speed; and
the increasing the power output of the at least one second motor comprises increasing motor speed.

7. The method of claim 5 or claim 6, wherein the plurality of rotors (112, 212a-d) are variable pitch rotors; and
the reducing the power output of the at least one first motor comprises at least one of reducing motor speed and changing rotor pitch; and
the increasing the power output of the at least one second motor comprises at least one of increasing motor speed and changing rotor pitch.

8. The method of any one of claim 5 to claim 7, wherein the motors (111, 211a-d) are hydraulic motors.

9. The method of any one of claim 5 to claim 8, further comprising allowing an operator to override reducing the power output of the at least one first motor.

## Patentansprüche

1. Verteiltes Antriebssystem (110, 210) mit Wärmemanagement für ein Flugzeug, wobei das System umfasst:
zwei oder mehr Motoren (211a-d, 311a-d);
zwei oder mehr Rotoren (212a-d, 312a-d), die jeweils einem der zwei oder mehr Motoren (211a-d, 311a-d) zugeordnet sind, wobei jeder Motor (211a-d, 311a-d) einzeln gesteuert wird und jeder Motor (211a-d, 311a-d) einen Temperatursensor (326) umfasst;
eine Piloteneingabesteuerung (107), die mit den zugeordneten Motoren (211a-d, 311a-d) verbunden ist, um von den zugeordneten Motoren (211a-d, 311a-d) die Erzeugung eines geforderten Schubes zu fordern,
ein Steuersystem (300), das eine Steuerlogik (324) mit Wärmemanagement umfasst, die mit der Piloteneingabesteuerung (107), den Temperatursensoren (326) und den Motoren (211a-d, 311a-d) verbunden ist, wobei die Steuerlogik (324) konfiguriert ist, eine Motorleistungsabgabe jedes Motors der zugeordneten Motoren (211a-d, 311a-d) unabhängig zu steuern, um den geforderten Schub zu erzeugen, und eine Motortemperatur eines oder mehrerer der zugeordneten Motoren (211a-d, 311a-d) zu steuern;
ein Flüssigkeitskühlsystem (220), das Regler (224), Leitungen (226) und ein Kühlmittelreservoir (228) beinhaltet, wobei die Regler (224) mit Leitungen (226) zwischen einem Kühlmittelreservoir (228) und jedem der Motoren (211a-d) in Kommunikation stehen; und
wobei das Steuersystem weiter mit den Reglern (224) verbunden ist und wobei die Steuerlogik (324) konfiguriert ist, in Reaktion darauf, dass eine von einem oder mehreren der Temperatursensoren (326) des einen oder der mehreren der Motoren (211a-d) gemessene Temperatur über einer Schwellentemperatur liegt, einen oder mehrere der Regler (224) zu bedienen, um eine Kühlkapazität, die durch einen oder mehrere der Motoren (211a-d) zirkuliert, zu erhöhen.

2. System (110, 210) nach Anspruch 1, wobei die zwei oder mehr Rotoren (112, 212a-d) in einem Flugzeug (100) beinhaltet sind.

3. System (110, 210) nach einem der Ansprüche 1 oder 2, wobei sich die zwei oder mehr Rotoren (112, 212a-d) in einer Drehmomentausgleichsmatrix befinden.

4. System (110, 210) nach einem der Ansprüche 1 bis 3, wobei die Motorleistungsabgabe Motordrehzahl oder Motordrehmoment umfasst.

5. Verfahren zum Betreiben des verteilten Antriebssystems (110, 210) nach einem der vorstehenden Ansprüche, wobei das Verfahren umfasst:
Betreiben der Vielzahl von Rotoren (112, 212a-d), die einzeln von den Motoren (111, 211a-d) angetrieben werden, um einen geforderten Schub zu erzeugen;
Erfassen einer Motortemperatur jedes der Motoren (111, 211a-d);
Reduzieren einer Leistungsabgabe mindestens eines ersten Motors der Motoren (111, 211a-d) in Reaktion darauf, dass die Motortemperatur des mindestens einen ersten Motors eine Temperaturschwelle überschreitet; und
in Reaktion auf Reduzieren der Leistungsabgabe des mindestens einen ersten Motors, Erhöhen einer Leistungsabgabe mindestens eines zweiten Motors der Motoren (111, 211a-d), um den geforderten Schub aufrechtzuerhalten.

6. Verfahren nach Anspruch 5, wobei die Vielzahl von Rotoren (112, 212a-d) Rotoren mit festem Anstellwinkel sind und die Motoren (111, 211a-d) drehzahlvariable Motoren sind;
das Reduzieren der Leistungsabgabe des mindestens einen ersten Motors Reduzieren der Motordrehzahl umfasst; und
das Erhöhen der Leistungsabgabe des mindestens einen zweiten Motors Erhöhen der Motordrehzahl umfasst.

7. Verfahren nach Anspruch 5 oder Anspruch 6, wobei die Vielzahl von Rotoren (112, 212a-d) Rotoren mit variablem Anstellwinkel sind; und
das Reduzieren der Leistungsabgabe des mindestens einen ersten Motors mindestens eines aus Reduzieren der Motordrehzahl und Verändern des Rotoranstellwinkels umfasst; und
das Erhöhen der Leistungsabgabe des mindestens einen zweiten Motors mindestens eines aus Erhöhen der Motordrehzahl und Verändern des Rotoranstellwinkels umfasst.

8. Verfahren nach einem von Anspruch 5 bis Anspruch 7, wobei die Motoren (111, 211a-d) Hydraulikmotoren sind.

9. Verfahren nach einem von Anspruch 5 bis Anspruch 8, das weiter Ermöglichen für einen Bediener, Reduzieren der Leistungsabgabe des mindestens einen ersten Motors außer Kraft zu setzen, umfasst.

## Revendications

1. Système de propulsion distribuée (110, 210) avec gestion thermique pour un aéronef, le système comprenant :
deux moteurs (211a-d, 311a-d) ou plus ;
deux rotors (212a-d, 312a-d) ou plus étant chacun associés à l'un des deux moteurs (211a-d, 311a-d) ou plus, chaque moteur (211a-d, 311a-d) étant commandé individuellement, et chaque moteur (211a-d, 311a-d) comprenant un capteur de température (326) ;
une commande d'entrée pilote (107) raccordée aux moteurs (211a-d, 311a-d) associés pour demander aux moteurs (211a-d, 311a-d) associés de produire une poussée demandée,
un système de commande (300) comprenant une logique de commande (324) avec gestion thermique raccordée à la commande d'entrée pilote (107), aux capteurs de température (326) et aux moteurs (211a-d, 311a-d), dans lequel la logique de commande (324) est configurée pour commander indépendamment une sortie de puissance de moteur de chaque moteur des moteurs (211a-d, 311a-d) associés pour produire la poussée demandée et pour commander une température de moteur d'un ou plusieurs des moteurs (211a -d, 311a-d) associés ;
un système de refroidissement de liquide (220) incluant des régulateurs (224), des conduits (226) et un réservoir de liquide de refroidissement (228), les régulateurs (224) étant en communication avec des conduits (226) entre un réservoir de liquide de refroidissement (228) et chacun des moteurs (211a-d) ; et
le système de commande étant en outre raccordé aux régulateurs (224) et dans lequel la logique de commande (324) est configurée pour manipuler un ou plusieurs des régulateurs (224) pour augmenter une capacité de refroidissement circulant à travers un ou plusieurs des moteurs (211a-d) en réponse à une température lue par un ou plusieurs des capteurs de température (326) des un ou plusieurs des moteurs (211a-d) étant au-dessus d'une température seuil.

2. Système (110, 210) selon la revendication 1, dans lequel les deux rotors (112, 212ad) ou plus sont inclus dans un aéronef (100).

3. Système (110, 210) selon l'une quelconque des revendications 1 ou 2, dans lequel les deux rotors (112, 212a-d) ou plus sont dans une matrice anti-couple.

4. Système (110, 210) selon l'une quelconque des revendications 1 à 3, dans lequel la puissance de sortie de moteur comprend la vitesse de moteur ou le couple de moteur.

5. Procédé de fonctionnement du système de propulsion distribuée (110, 210) selon l'une quelconque des revendications précédentes, le procédé comprenant les étapes consistant à :
faire fonctionner la pluralité de rotors (112, 212a-d) entraînés individuellement par les moteurs (111, 211a-d) pour produire une poussée demandée ;
détecter une température de moteur de chacun des moteurs (111, 211a-d) ;
réduire une puissance de sortie d'au moins un premier moteur des moteurs (111, 211a-d) en réponse à la température de moteur du au moins un premier moteur dépassant un seuil de température ; et
augmenter, en réponse à la réduction de la puissance de sortie du au moins un premier moteur, une puissance de sortie d'au moins un second moteur des moteurs (111, 211a-d) pour maintenir la poussée demandée.

6. Procédé selon la revendication 5, dans lequel la pluralité de rotors (112, 212a-d) sont des rotors à pas fixe et les moteurs (111, 211a-d) sont des moteurs à vitesse variable ;
la réduction de la puissance de sortie du au moins un premier moteur comprend la réduction de la vitesse de moteur ; et
l'augmentation de la puissance de sortie du au moins un second moteur comprend l'augmentation de la vitesse de moteur.

7. Procédé selon la revendication 5 ou la revendication 6, dans lequel la pluralité de rotors (112, 212a-d) sont des rotors à pas variable ; et
la réduction de la puissance de sortie du au moins un premier moteur comprend au moins l'une de la réduction de la vitesse de moteur et la modification du pas de rotor ; et
l'augmentation de la puissance de sortie du au moins un second moteur comprend au moins l'une de l'augmentation de la vitesse de moteur et la modification du pas de rotor.

8. Procédé selon l'une quelconque de la revendication 5 à la revendication 7, dans lequel les moteurs (111, 211a-d) sont des moteurs hydrauliques.

9. Procédé selon l'une quelconque de la revendication 5 à la revendication 8, comprenant en outre le fait d'autoriser un opérateur à annuler la réduction de la puissance de sortie du au moins un premier moteur.
